# DEMANDE DE BREVET EUROPEEN

(11) **EP 1 607 270 A1**
(43) Date de publication de la demande: **21.12.2005**
(21) Numéro de dépôt: 05291284.7
(22) Date de dépôt: 15.06.2005
(51) Int. Cl.: B60R 13/01, B60P 1/02, B60P 1/60, B62D 33/00

(54) **Dispositif d'aide au chargement d'un compartiment à bagages d'un véhicule automobile**

(30) Priorité: 18.06.2004 FR 0451291
(71) Demandeur: Centre d'Etude et de Recherche pour l'Automobile ( CERA), 51100 Reims (FR)
(72) Inventeur: Bayle, André-Xavier, 51100 Reims (FR)
(74) Mandataire: Breese Derambure Majerowicz

(57) **Abrégé**

L'invention concerne un ensemble de protection (1) du plancher d'un compartiment à bagage d'un véhicule automobile, ledit ensemble comprenant une couche de revêtement (2) dudit plancher, ladite couche comprenant au moins une ouverture (7) dans laquelle un dispositif d'aide au chargement (3) d'objets est disposé, le dispositif d'aide (3) comprenant au moins un élément supérieur (9) dont la surface supérieure (12) est agencée pour favoriser le glissement de l'objet sur elle, ledit élément supérieur et ladite couche de revêtement étant mobiles en translation l'un par rapport à l'autre selon une direction sensiblement perpendiculaire au plan de la couche (2) entre une position de stockage dans laquelle le dispositif d'aide (3) est en retrait par rapport à la surface supérieure de la couche (2) et une position d'aide au chargement dans laquelle le dispositif d'aide (3) est en saillie par rapport à la surface supérieure de la couche (2), ladite translation étant commandée par un dispositif de déplacement réciproque de l'élément supérieur (9) et de la couche (2).

## Description

L'invention concerne un ensemble de protection du plancher d'un compartiment à bagages d'un véhicule automobile.

II est connu deux types d'ensembles de protection du plancher d'un compartiment à bagages d'un véhicule automobile.

Selon un premier type, de tels ensembles présentent une surface supérieure antidérapante afin que les objets stockés dans le compartiment à bagages ne puisse se déplacer pendant que le véhicule est en mouvement. On cherche ainsi à éviter que les objets ne soient abîmés pendant le transport. Cependant, avec une telle surface, le chargement du compartiment à bagages est rendu plus difficile du fait que les objets ne glissent pas sur le fond du compartiment à bagages.

Selon un deuxième type, de tels ensembles présentent une surface supérieure apte à favoriser les glissement des objets sur elle. Ainsi, le chargement de ces objets dans le compartiment à bagage est facilité. Cependant, les objets ne sont alors pas maintenus sur le fond du compartiment à bagages et sont susceptibles de se déplacer lorsque le véhicule est en mouvement. Il se peut alors que les objets soient endommagés lors de leur transport.

En variante de ce deuxième type, on a proposé de disposer des baguettes présentant une surface supérieure glissante sur un revêtement antidérapant formant la surface supérieure de l'ensemble. Ainsi l'ensemble présente des zones antidérapantes pour bloquer les objets lors de leur transport et des zones glissantes pour assister le chargement de ces objets. Cependant une telle solution n'es pas satisfaisante car les baguettes glissantes sont en saillie par rapport à la surface supérieure du revêtement antidérapant. Ainsi, les objets reposent sur ces baguettes et sont toujours susceptibles de se déplacer lorsque le véhicule est en mouvement.

L'invention vise à pallier ces inconvénients en proposant un ensemble de protection du plancher d'un compartiment à bagages dans lequel une surface antidérapante et un dispositif d'aide au chargement sont susceptibles d'être déplacer l'un par rapport à l'autre de sorte que l'ensemble peut occuper une position de stockage dans laquelle les objets sont maintenus sur l'ensemble et une position d'aide au chargement dans laquelle les objets peuvent glisser sur l'ensemble.

A cet effet, l'invention concerne un ensemble de protection du plancher d'un compartiment à bagage d'un véhicule automobile, ledit ensemble comprenant une couche de revêtement dudit plancher, ladite couche comprenant au moins une ouverture dans laquelle un dispositif d'aide au chargement d'objets est disposé, le dispositif d'aide comprenant au moins un élément supérieur dont la surface supérieure est agencée pour favoriser le glissement de l'objet sur elle, ledit élément supérieur et ladite couche de revêtement étant mobiles en translation l'un par rapport à l'autre selon une direction sensiblement perpendiculaire au plan de la couche entre une position de stockage dans laquelle le dispositif d'aide est en retrait par rapport à la surface supérieure de la couche et une position d'aide au chargement dans laquelle le dispositif d'aide est en saillie par rapport à la surface supérieure de la couche, ladite translation étant commandée par un dispositif de déplacement réciproque de l'élément supérieur et de la couche.

Ainsi, lorsque le véhicule est en mouvement, l'ensemble de protection est placé dans sa position de stockage afin de prévenir le déplacement des objets présents dans le compartiment à bagages. Lorsque l'on souhaite charger ce compartiment, l'ensemble est placé dans sa position d'aide au chargement afin de faciliter celui-ci en favorisant le glissement des objets sur la surface de l'ensemble.

Selon une réalisation, le dispositif de déplacement comprend des moyens pneumatiques agencés pour permettre le déplacement relatif de la couche et du dispositif d'aide au chargement.

De tels moyens sont avantageux car ils sont sensiblement silencieux, de réalisation simple et économique.

D'autres objets et avantages de l'invention apparaîtront au cours de la description qui suit, faite en référence aux dessins annexés.

La figure 1 est une représentation schématique en coupe d'un ensemble de protection selon l'invention montrant un dispositif d'aide au chargement disposé dans une couche de revêtement du plancher, représentée partiellement, d'un compartiment à bagages d'un véhicule automobile.

La figure 2 est une représentation schématique partielle éclatée et en perspective du dispositif d'aide au chargement de la figure 1.

La figure 3 est une représentation schématique en perspective de la couche de revêtement selon la figure 1.

Dans la description, on définit les termes « inférieur » et « supérieur » selon la direction d'élévation d'un véhicule automobile et le terme « latéral » selon une direction sensiblement perpendiculaire au plan de symétrie du véhicule.

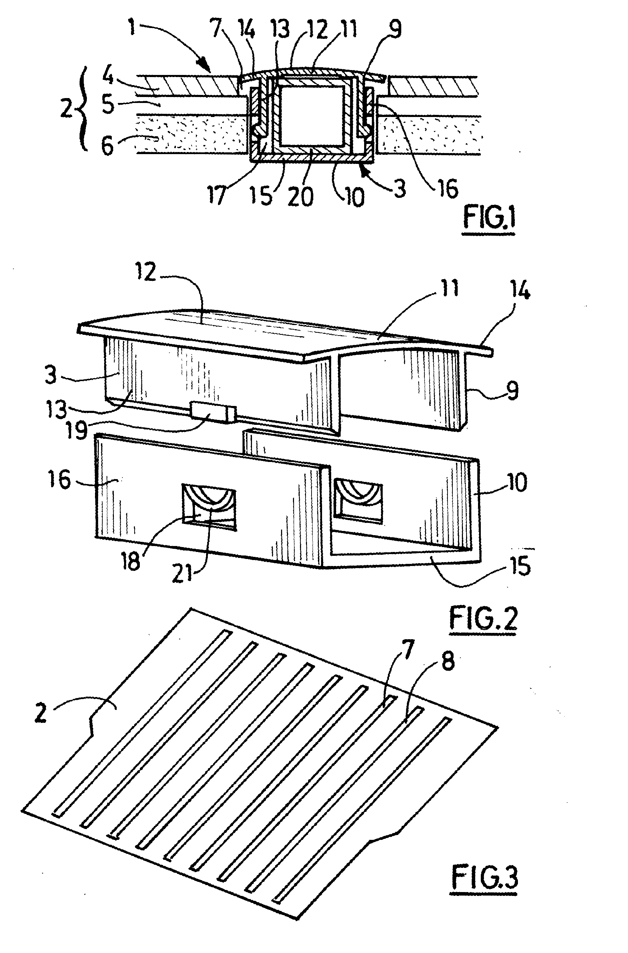

En référence à la figure 1, on décrit un ensemble de protection 1 du plancher d'un compartiment à bagage d'un véhicule automobile comprenant une couche de revêtement 2 du plancher et un dispositif d'aide au chargement 3.

La couche de revêtement 2 est par exemple un tapis usuellement utilisé dans ce type d'application. Selon la réalisation représentée sur la figure 1, elle comprend une couche d'aspect 4 par exemple formée par une moquette, une couche rigide 5 associée à la surface inférieure de la couche d'aspect 4 et une couche de mousse 6 associée à la surface inférieure de la couche rigide 5. La couche rigide 5 est par exemple formée par un matériau tel que du bois et la couche de mousse 6 est par exemple une couche de polyuréthanne.

La couche de revêtement 2 est prévue pour recouvrir l'intégralité du plancher du compartiment à bagages ainsi que les boîtiers qui peuvent être prévus dans ce plancher.

La couche de revêtement 2 présente une surface supérieure antidérapante. Ainsi, lorsqu'un objet repose sur cette couche, il est retenu et ne glisse pas à l'intérieur du compartiment à bagages, notamment lorsque le véhicule est en mouvement.

La couche de revêtement 2 comprend au moins une ouverture 7. Selon la réalisation représentée sur la figure 3, l'ouverture 7 est une rainure 8 s'étendant sensiblement sur toute la longueur de la couche 2 selon une direction destinée à être sensiblement parallèle à la profondeur du compartiment à bagages. Selon cette réalisation, la couche 2 comprend une pluralité de rainures 8 s'étendant parallèlement les unes aux autres et réparties sur toute la largeur de la couche 2. La largeur est définie comme étant perpendiculaire à la direction de la profondeur du compartiment à bagages. On pourrait également envisager d'autres formes pour les ouvertures 7, de sorte par exemple à les adapter à la forme du plancher du compartiment à bagages.

Une ouverture 7 est prévue pour recevoir un dispositif d'aide au chargement 3, tel que représenté sur la figure 1.

Selon la réalisation représentée sur les figures et notamment sur la figure 2, le dispositif d'aide 3 comprend un élément supérieur 9 et un élément inférieur 10 associés l'un à l'autre de façon à être mobile en translation l'un par rapport à l'autre selon une direction sensiblement perpendiculaire au plan de la couche 2.

L'élément supérieur 9 est un profilé par exemple réalisé en matériau plastique. Il comprend une baguette 11 s'étendant sensiblement parallèlement au plan de la couche de revêtement 2. La baguette 11 comprend une surface supérieure 12 agencée pour favoriser le glissement d'un objet sur elle. A cet effet, la surface supérieure 12 est par exemple légèrement bombée. Deux pattes de support 13 s'étendent sensiblement perpendiculairement à la baguette 11 à partir de la surface inférieure de celle-ci. Des ailes latérales 14 prolongeant la baguette 11 s'étendent à partir de chaque patte de support 13 vers l'extérieur de la baguette 11.

L'élément inférieur 10 est un contre profilé par exemple réalisé en matériau plastique. La section de l'élément inférieur 10 présente une géométrie sensiblement en forme de U. L'élément inférieur 10 comprend une baguette de support 15 sensiblement parallèle au plan de la couche de revêtement 2. Des pattes de support 16 s'étendent de chaque côté de la baguette de support 15, sensiblement perpendiculairement à celle-ci.

L'élément supérieur 9 est associé à l'élément inférieur 10, les pattes 13 étant disposées contre les pattes de support 16, entre celles-ci. De la sorte, la baguette 11 et les pattes 13 forment un logement 17 avec la baguette de support 15 et les pattes de support 16. Le logement 17 présente une section sensiblement rectangulaire.

L'élément supérieur 9 et l'élément inférieur 10 comprennent des moyens d'association réciproques permettant un déplacement en translation de l'élément supérieur 9 par rapport à l'élément inférieur 10 selon une direction sensiblement perpendiculaire au plan de la couche 2. A cet effet, les pattes de support 16 comprennent chacune au moins une ouverture 18, à l'intérieur de laquelle est inséré un décrochement 19 prévu sur les pattes 13 de l'élément supérieur 9. Les dimensions de l'ouverture 18 et du décrochement 19 sont agencées pour que le décrochement 19 puisse se déplacer en translation à l'intérieur de l'ouverture 18 selon une direction sensiblement perpendiculaire au plan de la couche 2.

Un dispositif d'aide au chargement 3 est prévu pour s'étendre à l'intérieur de chaque rainure 8, par exemple sur toute la longueur de celle-ci. L'élément inférieur 10 est associé à la couche de revêtement 2 par l'intermédiaire de moyens de fixation réciproque (non représenté). L'élément inférieur est par exemple fixé à la couche rigide 5 par des moyens de fixation prévus sur les pattes de support 16. Selon une variante, la couche de revêtement 2 et l'élément inférieur 10 sont fixés au plancher du compartiment à bagages sur une plaque de support reposant sur le plancher du compartiment à bagages. La plaque de support peut être prévue lorsque le dispositif d'aide au chargement s'étend au-dessus d'un logement prévu dans le plancher du compartiment à bagages, tel qu'un logement pour roue de secours.

L'ensemble 1 comprend un dispositif de déplacement réciproque de l'élément supérieur 9 et de la couche 2, commandant le déplacement relatif de la couche 2 et de l'élément supérieur 9 de sorte que l'élément 9 et la couche de revêtement 2 sont mobiles en translation l'un par rapport à l'autre selon une direction sensiblement perpendiculaire au plan de la couche 2 entre une position de stockage dans laquelle le dispositif d'aide 3 est en retrait par rapport au plan de la couche 2 et une position d'aide au chargement dans laquelle le dispositif d'aide 3 est en saillie par rapport au plan de la couche 2.

Selon une réalisation, le dispositif de déplacement comprend des moyens pneumatiques.

Selon la réalisation représentée sur les figures, la couche de revêtement 2 est fixe et l'élément supérieur 9 du dispositif d'aide 3 se déplace par rapport à l'élément inférieur 10 pour venir en saillie par rapport au plan de la couche 2.

A cet effet, les moyens pneumatiques comprennent par exemple une chambre à air 20 disposée entre l'élément inférieur 10 et l'élément supérieur 9 à l'intérieur du logement 17 et des moyens de gonflement (non représentés) de la chambre à air 20. Le gonflement de la chambre à air 20 entraîne le déplacement de l'élément supérieur 9 par rapport à l'élément inférieur 10 de sorte à placer l'ensemble dans la position d'aide au chargement. Les moyens de gonflement sont par exemple formé par un compresseur disposé dans le compartiment à bagages et auquel la chambre à air 20 est reliée. Selon une application, le compresseur présente également d'autres fonctions, telles que celle de permettre le gonflement des roues.

Selon une réalisation, la même chambre à air passe en continu dans tous les dispositifs d'aide 3 et son gonflement entraîne le déplacement simultané de chaque élément supérieur 9. Selon une autre réalisation, la chambre à air 20 se divise en plusieurs branches, chacune passant dans un dispositif d'aide 3. On peut également prévoir une chambre à air 20 distincte pour chaque dispositif 3.

Afin de ramener l'ensemble de protection dans sa position de stockage, après dégonflement de la chambre à air 20, le dispositif de déplacement comprend un moyen de renvoi 21 prévu entre l'élément supérieur 9 et l'élément inférieur 10. Selon la réalisation représentée sur la figure 2, le moyen de renvoi 21 comprend au moins une lame ressort, disposée dans la partie supérieure de l'ouverture 18. Ainsi, lorsque la chambre à air 20 est gonflée, le décrochement 19 monte dans l'ouverture 18 et appuie sur le moyen de renvoi 21 et comprime celui-ci. Lorsque la chambre à air 20 est dégonflée, le moyen de renvoi 21 exerce un effort vers le bas sur le décrochement 19 et l'élément supérieur 9 retourne vers la position de stockage. Le moyen de renvoi peut être moulé d'une pièce avec l'élément inférieur 10.

Le fonctionnement de l'ensemble de protection 1 est maintenant décrit.

Lorsque le compartiment à bagages est fermé et qu'aucun chargement du compartiment n'a lieu, l'ensemble 1 se trouve dans sa position de stockage dans laquelle le dispositif d'aide au chargement 3 est en retrait par rapport à la surface supérieure de la couche de revêtement 2. Ainsi, les objets dans le compartiment à bagages reposent sur une surface antidérapante et restent sensiblement immobiles lorsque le véhicule est en mouvement.

Lorsque l'on ouvre le compartiment à bagages, le dispositif de déplacement commande les moyens de gonflement de la chambre à air 20 de sorte que l'ensemble 1 se met dans sa position d'aide au chargement. Ainsi, les éléments supérieurs 9 présentant une surface supérieure 12 glissante de chaque dispositif d'aide 3 sont en saillie par rapport à la surface supérieure de la couche 2. Le chargement et le déchargement d'objets dans le coffre à bagages est alors facilité car ceux-ci peuvent être déplacés par glissement dans le fond du coffre à bagage. On peut également prévoir d'activer les moyens de gonflement au moyen par exemple d'un bouton de commande et non dès l'ouverture du compartiment à bagages.

Lorsque le compartiment à bagages est refermé ou que le bouton de commande n'est plus sollicité, l'ensemble 1 retourne dans la position de stockage, les moyens de renvoi 21 permettant de faire descendre les éléments supérieur 9 en retrait de la surface supérieure de la couche 2.

## Revendications

1. Ensemble de protection (1) du plancher d'un compartiment à bagage d'un véhicule automobile, ledit ensemble comprenant une couche de revêtement (2) dudit plancher, ladite couche comprenant au moins une ouverture (7) dans laquelle un dispositif d'aide au chargement (3) d'objets est disposé, ledit ensemble étant **caractérisé en ce que** le dispositif d'aide (3) comprend au moins un élément supérieur (9) dont la surface supérieure (12) est agencée pour favoriser le glissement de l'objet sur elle, ledit élément supérieur et ladite couche de revêtement étant mobiles en translation l'un par rapport à l'autre selon une direction sensiblement perpendiculaire au plan de la couche (2) entre une position de stockage dans laquelle le dispositif d'aide (3) est en retrait par rapport à la surface supérieure de la couche (2) et une position d'aide au chargement dans laquelle le dispositif d'aide (3) est en saillie par rapport à la surface supérieure de la couche (2), ladite translation étant commandée par un dispositif de déplacement réciproque de l'élément supérieur (9) et de la couche (2).

2. Ensemble de protection selon la revendication 1, **caractérisé en ce que** le dispositif d'aide (3) comprend en outre un élément inférieur (10), l'élément supérieur (9) et l'élément inférieur (10) étant mobile en translation l'un par rapport à l'autre selon une direction sensiblement perpendiculaire au plan de la couche (2) entre la position de stockage et la position d'aide au chargement.

3. Ensemble de protection selon la revendication 1 ou 2, **caractérisé en ce que** le dispositif de déplacement comprend des moyens pneumatiques agencés pour permettre le déplacement relatif de la couche (2) et du dispositif d'aide au chargement (3).

4. Ensemble de protection selon la revendication 3, **caractérisé en ce que** les moyens pneumatiques comprennent une chambre à air (20) disposée entre l'élément inférieur (10) et l'élément supérieur (9) et des moyens de gonflement de ladite chambre à air, le gonflement de la chambre à air (20) entraînant le déplacement de l'élément supérieur (9) par rapport à l'élément inférieur (10) de sorte à placer l'ensemble (1) dans la position d'aide au chargement.

5. Ensemble de protection selon l'une quelconque des revendications 2 à 4, **caractérisé en ce que** l'élément supérieur (9) et l'élément inférieur (10) sont formés par un profilé et un contre profilé associés l'un à l'autre de façon mobile.

6. Ensemble de protection selon l'une quelconque des revendications 2 à 5, **caractérisé en ce que** le dispositif de déplacement comprend un moyen de renvoi (21) prévu entre l'élément supérieur (9) et l'élément inférieur (10), ledit moyen de renvoi étant agencé pour permettre le déplacement de l'élément supérieur (9) par rapport à l'élément inférieur (10) de sorte à placer l'ensemble (1) dans la position de stockage.

7. Ensemble de protection selon l'une quelconque des revendications 1 à 6, **caractérisé en ce que** l'ouverture (7) de la couche de revêtement (2) est une rainure (8) s'étendant sensiblement sur toute la longueur de ladite couche selon une direction destinée à être sensiblement parallèle à la profondeur du compartiment à bagages.

8. Ensemble de protection selon l'une quelconque des revendications 1 à 7, **caractérisé en ce que** la couche de revêtement (2) présente une surface supérieure antidérapante.

9. Ensemble de protection selon l'une quelconque des revendications 2 à 8, **caractérisé en ce que** l'élément inférieur (10) est associé à la couche de revêtement (2) par l'intermédiaire de moyens de fixation réciproque.
